# EUROPÄISCHE PATENTSCHRIFT

(11) **EP 3 795 344 B1**
(45) Veröffentlichungstag und Bekanntmachung des Hinweises auf die Patenterteilung: **26.07.2023**
(21) Anmeldenummer: 20020370.1
(22) Anmeldetag: 13.08.2020
(51) Int. Cl.: B30B 15/26, B21D 43/02, B21D 43/05, B21D 43/10, B30B 15/32

(54) **PRESSLINIE UND VERFAHREN DER KONTROLLE DER GEPRESSTEN TEILE AUF DIESER LINIE**
PRESS LINE AND METHOD OF CONTROLLING THE PRESSED PARTS ON THIS LINE
LIGNE DE PRESSES ET PROCÉDÉ DE CONTRÔLE DE PIÈCES PRESSÉES SUR CETTE LIGNE

(30) Priorität: 13.08.2019 CZ 20190530
(43) Veröffentlichungstag der Anmeldung: 24.03.2021
(73) Patentinhaber: Skoda Auto a.s., 29301 Mladá Boleslav (CZ)
(72) Erfinder: Sebesta, Jan, CZ-46602 Jablonec nad Nisou (CZ)

(56) Entgegenhaltungen:
- DE-A1-102013 021 371
- DE-A1-102014 214 201
- DE-A1-102017 005 170
- DE-A1-102017 221 649
- GB-A- 2 159 271
- JP-A- S6 283 970
- JP-A- H03 175 000
- US-A1- 2008 091 360

## Beschreibung

### Technisches Gebiet

Die Erfindung betrifft die Kontrolle der Oberfläche von Pressteilen im Rahmen einer Pressenstraße, insbesondere in der Fahrzeugfertigung.

### Bisheriger Stand der Technik

Gepresste Blechteile stellen derzeit die Basis von selbsttragenden Konstruktionen nicht nur in der Automobilindustrie dar. Deren Festigkeit darf deshalb durch die beim Abpressen eventuell entstehenden Blechdickenabnahmen, Beanspruchungen und Risse nicht reduziert werden und deswegen ist eine Kontrolle der kritischen Stellen am fertigen Pressteil unerlässlicher Bestandteil des Pressvorgangs. Bei der Blech-Kaltumformung kommt es an einigen Stellen des Materials zur erhöhten Zugbeanspruchung und dies kann eine Störung seiner Homogenität verursachen. Im gepressten Material kann dann eine sog. Überbeanspruchung entstehen, was eine Blechdickenabnahme an der Zugstelle oder ein Haarriss bis zu einem offenen Riss ist.

Im Stand der Technik sind zwei grundlegende Verfahren zur Kontrolle der Fehler auf Pressteilen bekannt. Als Basisverfahren wird die visuelle Kontrolle durch den Menschen angewendet, indem der Anlagenbediener jedes produzierte Teil physisch durchsieht. Offenkundiger Nachteil besteht in einem hohen Maß an Risiko des menschlichen Versagens hinsichtlich dessen, dass der Mensch einen sehr begrenzten Zeitraum für die Kontrolle eines Bauteils hat. Mit zunehmender Zeit sinkt zugleich die Qualität der Kontrolle durch die Müdigkeit des Menschen.

Eine weitere Möglichkeit besteht in der Kontrolle mit den statisch um das Förderband angeordneten Kameras und nachfolgender Computer-Verarbeitung der ermittelten Daten. Die Kameras nehmen die Oberfläche des Pressteils auf und die so ermittelten Daten werden in eine EDV-Einrichtung übertragen. Die Datenverarbeitung erfolgt im Offline-Modus, was die Dauer der Kontrolle verzögert. Bei Änderung des Pressteil-Typs muss die Anlagenbedienung die Positionen der Kameras manuell umstellen und einen entsprechenden Fokus einstellen. Dies erhöht den Zeitverlust und bringt eventuelle Probleme mit ungenauer Einstellung des Fokus und eventueller Verzerrung der Ergebnisse.

Aus der DE 10 2013 021 371 A1 ist eine Vorrichtung zur Herstellung von Formteilen in einer Pressenlinie mit mehreren Pressen zur Umformung einer Platine zu dem Formteil, zumindest einer im Bereich zumindest einer Presse angeordneten optischen Erfassungseinheit zur optischen Erfassung des Formteils oder eines Halbzeugs, zumindest einer mit der Erfassungseinheit gekoppelten Auswerteeinheit zur Auswertung mittels der Erfassungseinheit erfasster Daten und zur Detektion von Fehlern am Formteil oder Halbzeug anhand der Auswertung, und zumindest einer mit der Auswerteeinheit gekoppelten Markierungseinheit zur Aufbringung zumindest einer Markierung auf das Formteil oder Halbzeug bei einem detektierten Fehler bekannt. Diese Druckschrift wurde zur Formulierung des Oberbegriffs von Patentanspruch 1 herangezogen.

Aus der DE 10 2017 005 170 A1 ist ein System zum Prüfen von Oberflächen eines oder mehrerer Werkstücke für ein Fahrzeug bekannt. Das System weist eine Vielzahl von Industrierobotern auf, wobei jeder der Industrieroboter einen bewegbaren Roboterarm und eine Kameraeinheit an einem Ende des Roboterarms aufweist.

Schließlich wird zum Stand der Technik weiterhin verwiesen auf die JP S62 83970 A sowie die GB 2 159 271 A.

### Darstellung der Erfindung

Es ist daher eine Aufgabe der Erfindung, eine Pressenstraße und ein Verfahren zur Kontrolle der Oberfläche von Pressteilen vorzuschlagen, die in der Taktzeit der Pressenstraße erfolgt, auf die Änderung des Programms der Pressenstraße automatisch reagiert und mit der Bedienung des Austragförderbandes kommuniziert.

Diese Aufgabe wird gelöst durch eine Pressenstraße umfassend eine Pressanlage mit einer Reihe von Pressen, entnehmend robotische Arme am Ausgang der Pressanlage, deren Handlingsbereich in den Bereich des Austragförderers eingreift und die zum Transport der Pressteile aus der Pressenanlage auf den Förderer ausgestaltet sind, aus einem Austragförderer und einer für die Ausgabe eines sinnwahrnehmbaren Signals ausgestalteten Einrichtung, wobei im Anfangsbereich des Austragförderers ein Arbeitsplatz der robotischen Kontrolle der Oberfläche der Pressteile angeordnet ist, umfassend die robotischen Arme, eine Steuereinheit der robotischen Kontrolle sowie Kameras, wobei die robotischen Arme mit den Kameras bestückt sind, wobei in der Steuereinheit des Arbeitsplatzes der robotischen Kontrolle Bewegungsbahnen der robotischen Arme hinterlegt sind, die den Positionen der einzelnen kontrollierten Bereiche an der Oberfläche des Pressteils entsprechen, und wobei für ein Pressteil abweichende Bewegungsbahnen hinterlegt sind, die in regelmäßigen oder unregelmäßigen Zeitabständen abgewechselt werden.

Bevorzugt wird genutzt, dass die Pressenstraße ferner eine Steuereinheit der Pressenstraße umfasst, die datentechnisch mit der Steuereinheit des Arbeitsplatzes der robotischen Kontrolle verbunden ist.

Die Steuereinheit der Pressanlage und die Steuereinheit des Arbeitsplatzes der robotischen Kontrolle bilden PLC-Geräte, welche Daten über einen Kommunikationsbus austauschen. Eine beliebige der Steuereinheiten kann dabei als Auswertungssystem dienen, eventuell wird das Auswertungssystem als eine örtlich entfernte EDV-Anlage realisiert, welche das Ergebnis der Auswertung an die für die Ausgabe eines sinnwahrnehmbaren Signals ausgestaltete Einrichtung übergeben kann.

Bevorzugt sind in der Steuereinheit des Arbeitsplatzes der robotischen Kontrolle die Bewegungsbahnen der robotischen Arme hinterlegt, die den Positionen der einzelnen kontrollierten Bereiche an der Oberfläche des Pressteils entsprechen. Die mit Kameras bestückten robotischen Arme bewegen sich entlang der voreingestellten Bewegungsbahnen, die von der Steuereinheit des Arbeitsplatzes der robotischen Kontrolle bereitgestellt werden und die anhand der Informationen über das Programm der Pressanlage von der Steuereinheit der Pressanlage aktiviert werden. Die robotischen Arme stellen stationäre sechsarmige Roboter mit offener kinematischer Kette und einer am fernliegenden Ende angeordneten Kamera dar. Eingesetzt wird eine digitale Hochgeschwindigkeitskamera mit integriertem Laserstrahler.

Die Nachteile des Standes der Technik werden ferner durch ein Verfahren zur Kontrolle von Pressteilen mittels der oben beschriebenen Pressenstraße beseitigt, umfassend den Schritt des Einlegens des Werkstücks in die Pressenmaschine, das stufenweise Abpressen, die Verlegung des Pressteils auf den Förderband und weiter den Schritt der Kontrolle der Oberfläche des Pressteils mit Kameras, wobei ein Kamerakopf einer Kamera des robotischen Armes eine Bewegungsbahn in einer konstanten Höhe oberhalb der Oberfläche des Pressteils folgt, wobei diese Bewegungsbahn der im Speicher der Steuereinheit des Arbeitsplatzes der robotischen Kontrolle hinterlegten Bewegungsbahn entspricht. Weiter folgt der Schritt der Auswertung der aufgenommenen Daten durch das Auswertungssystem und, falls das Pressteil als fehlerloses Pressteil ausgewertet wird, folgt die Kontrolle eines weiteren Pressteils, falls das Pressteil als fehlerhaftes Pressteil ausgewertet wird, sendet die Steuereinheit des Arbeitsplatzes der robotischen Kontrolle die Information über die Kennzeichnung des Pressteils als n.i.O. und danach folgt die Kontrolle des weiteren Pressteils. Die Handhabungsroboter legen also das Werkstück in die Pressanlage ein und dieses wird mit weiteren Handhabungsrobotern in den Arbeitsbereich einzelner Pressen stufenweise weitergereicht. Nach Beendigung des Pressverfahrens wird das fertige Pressteil durch die Entnahmeroboter auf das Förderband gelegt, an deren Anfang der Arbeitsplatz der robotischen Kontrolle der Oberfläche des Pressteils angeordnet ist. Die Steuereinheit der Pressenstraße sendet der Steuereinheit der robotischen Kontrolle die Information über den Typ des Pressteils und die Position des Pressteils im Rahmen der Pressenstraße während des Pressprozesses, einschließlich der Information, dass das Pressteil auf das Band des Austragsförderes abgelegt wird.

Zum Zeitpunkt als die Steuereinheit der robotischen Kontrolle die Information empfängt, dass sich das Pressteil im Bereich des Arbeitsplatzes der robotischen Kontrolle befindet, erhält der mit Kamera bestückte robotische Arm von der Steuereinheit des Arbeitsplatzes der robotischen Kontrolle die Information über die Trajektorie, die angewendet wird, und bewegt sich in die Startposition und sendet dem Auswertungssystem die Information, dass er sich in der Messposition befindet. Während der Messung selbst bewegt sich der mit Kameras bestückte robotische Arm entlang der vorgegebenen Bewegungsbahn oberhalb der Oberfläche des Pressteils und die Kamera nimmt die Reflexion des Laserstrahls von der Oberfläche des Pressteils auf, der von dem im Kamerakopf integrierten Strahler emittiert wird. Die Kamera nimmt jeweils einen kontrollierten Abschnitt des Pressteils aus konstanter Entfernung auf. Die konstante Entfernung von der Oberfläche ist eine Vorbedingung, damit keine Unschärfe der aufgenommenen Bilddaten auftreten kann.

Nach Beendigung des Messzyklus sendet der mit Kameras bestückte robotische Arm an das Auswertungssystem die Meldung, dass die Aufnahme abgeschlossen ist und er die Messposition verlässt. Vorteilhaft wird genutzt, dass während des Schrittes der Auswertung der aufgenommenen Bilddaten durch das Auswertungssystem die von der Kamera aufgenommene Linie der Oberfläche des Pressteils mit dem vom Auswertungssystem aus den aufgenommenen Daten berechneten Krümmungstrend verglichen wird, wobei bei einer Überschreitung der Toleranz das Presssteil als Pressteil mit Fehler ausgewertet wird. Die von Kameras aufgenommenen Daten werden also in die Computereinrichtung übertragen und mit Auswertungssoftware verarbeitet. Diese bildet zuerst aus den aufgenommenen Daten der Oberfläche des Pressteils eine Kurve, approximiert diese und ermittelt für jeden Punkt den Krümmungstrend. Danach wird ein Abgleich der berechneten Krümmungstrends mit den Krümmungstrends der real aufgenommenen Linien durchgeführt. Bei dem Abgleich wird dabei eine voreingestellte Toleranz genutzt, welche die Höchstdifferenz zwischen dem aufgenommenen Wert und dem berechneten Krümmungstrend festlegt.

Stellt das Auswertungssystem keine Differenz zwischen den berechneten und gemessenen Krümmungstrends fest, wird das Pressteil als fehlerloses Pressteil ausgewertet und es folgt die Kontrolle des weiteren Pressteils.

Stellt das Auswertungssystem eine Differenz zwischen den berechneten und gemessenen Krümmungstrends fest, wird das Pressteil als fehlerhaftes Pressteil ausgewertet, die Steuereinheit des Arbeitsplatzes der robotischen Kontrolle sendet dann ein Signal an die Einrichtung, die ein sinnwahrnehmbares akustisches oder optisches Signal für die Bedienung des Austragförderes ausgibt und danach folgt die Kontrolle des weiteren Pressteils. Die endgültige Entscheidung über das fehlerhafte Pressteil führt die Bedienung des Austragförderes durch.

Bei Erkennung einer erhöhten Häufigkeit von fehlerhaften Pressteilen sendet das Auswertungssystem an die Steuereinheit der Pressenmaschine einen Abstellbefehl, wobei die erhöhte Häufigkeit als Anteil der fehlerhaften Pressteile in einer vorangehenden vorgegebenen Stückzahl der Pressteile definiert ist. Die Toleranz kann zum Beispiel als fünf fehlerhafte Teile unter den letzten zehn kontrollierten Pressteilen eingestellt werden, wenn also unter den letzten zehn nacheinander gehenden kontrollierten Pressteilen fünf fehlerhafte Pressteile erkannt wurden, dann sendet das Auswertungssystem an die Steuereinheit der Pressenstraße einen Abstellbefehl, damit die Ursache der erhöhten Ausschussrate ermittelt werden kann.

Mit Vorteil wird genutzt, dass für jeden Typ von Pressteilen mehrere den einzelnen kontrollierten Abschnitten entsprechende Trajektorien für die robotische Kontrolle hinterlegt sind und die Steuereinheit des Arbeitsplatzes der robotischen Kontrolle ermöglicht das Einprogrammieren der Kontrollhäufigkeit für jeweilige Abschnitte. Die Steuereinheit des Arbeitsplatzes der robotischen Kontrolle ermöglicht also das Einprogrammieren einer Sequenz von Messzyklen für einen jeweiligen Abschnitt, der im Messzyklus kontrolliert wird. Auf diese Art können diejenige Abschnitte des Pressteils priorisiert werden, welche als die am stärksten beanspruchten oder für die Qualität des Endproduktes kritischen Bereiche vorausbestimmt wurden, und für diese eine höhere Kontrollhäufigkeit einzustellen.

Die Daten aus den einzelnen Messzyklen werden im Speicher des Auswertungssystems archiviert und mit einem Zeit- und Positionslog versehen, in dem jegliche Informationen aus der Menge Zeit, Typ des Pressteils, Fehlerstelle, Kamerakennzeichnung enthalten sind, um einfachere Orientierung für den Fall einer rückwärtigen Suche der Messergebnisse für den Bedarf einer wiederholten Kalibrierung oder für nachfolgende detaillierte Kontrolle zu gewähren.

Bei einer Änderung des Typs des an der Pressenstraße gefertigten Pressteils sendet die Steuereinheit der Pressenstraße an die Steuereinheit des Arbeitsplatzes der robotischen Kontrolle die Information über die Änderung des Typs des Pressteils. Sind in der Steuereinheit des Arbeitsplatzes der robotischen Kontrolle die Trajektorien für die Kontrolle der Oberfläche des jeweiligen Typs des Pressteils hinterlegt, sendet diese an den mit Kamera bestückten robotischen Arm die Information über die Änderung der Trajektorie und der robotische Arm fährt die Position für die Messung der jeweiligen Trajektorie an. Kennt die Steuereinheit den Typ des Pressteils nicht und keine Trajektorien für die Oberflächenkontrolle hinterlegt sind, sendet sie an den mit Kamera bestückten robotischen Arm den Befehl zum Abstellen in die inaktive Position.

Der Vorteil der vorliegenden Lösung gegenüber der Oberflächenkontrolle durch Menschen oder der Nutzung von stationären Kameras liegt in der Automatisierung des Prozesses der Kontrolle der Oberfläche von Pressteilen, was eine wesentliche Einsparung der benötigten Zeit für die Kontrolle der Oberfläche von Pressteilen und angesichts der Eliminierung des Faktors Mensch während der Oberflächenkontrolle auch eine Verbesserung der Qualität der Kontrollergebnisse bringt. Einen weiteren Vorteil stellt die Kontrolle in der Taktzeit der Fertigungsstraße und insbesondere die sofortige Datenverarbeitung, was zur Zeiteinsparung und Betriebskontinuität der Fertigungsstraße führt.

### Erläuterung der Zeichnungen

Die Darstellung der Erfindung wird weiter anhand von Ausführungsbeispielen erläutert, die unter Nutzung von Zeichnungen beschrieben sind, wobei diese zeigen:

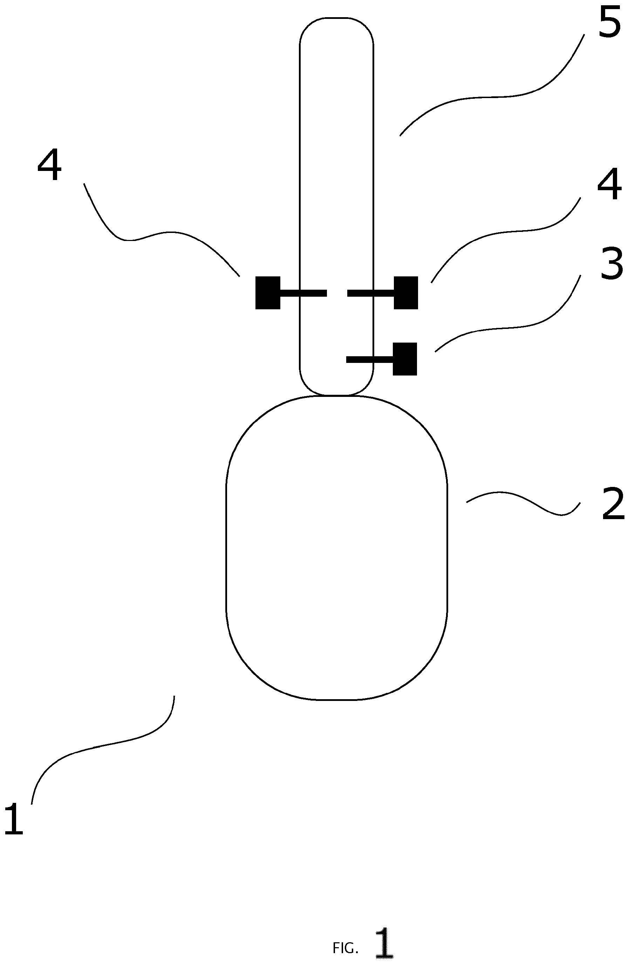

- Fig 1: schematische Darstellung der Pressenstraße;

### Ausführungsbeispiele der Erfindung

Die aufgeführten Ausführungen stellen Ausführungsvarianten der Erfindung dar, die jedoch aus Sicht des Schutzumfanges keinen einschränkenden Einfluss haben.

Die Grundausführung der Erfindung stellt die Pressenstraße 1 dar, in die das Werkstück eingelegt und mit weiteren Handhabungsrobotern in die einzelnen Pressen stufenweise weitergereicht wird. Am Ende der Pressanlage 2 entnimmt der entnehmende robotische Arm 3 das fertige Pressteil und legt dieses auf den Austragförderer 5 ab. Die entnehmenden robotischen Arme 3 stellen die stationären Roboter mit sieben Freiheitsgraden, offener Kinematik und aktiven Handhabungseffektor am letzten Gelenk dar. Der Handlingsbereich der entnehmenden robotischen Arme 3 greift dabei in den Bereich des Austragförderers 5 ein. Bestandteil der Pressenstraße 1 ist auch die Steuereinheit der Pressenstraße 1.

Am Anfang des Austragförderers 5 befindet sich der Arbeitsplatz der robotischen Kontrolle 4 bestückt mit den robotischen Armen mit digitalen Hochgeschwindigkeitskameras, die an eine externe EDV-Anlage mit entsprechender Auswertungssoftware angeschlossen sind. Die robotischen Arme der Kamerakontrolle stellen stationäre Roboter mit sechs Freiheitsgraden mit offener kinematischer Kette und mit einer am fernliegenden Ende angeordneten Kamera dar. Alternativ können auch Roboter mit geringeren Freiheitsgraden eingesetzt werden.

Bestandteil des Arbeitsplatzes 4 der robotischen Kontrolle ist eine für die Ausgabe eines sinnwahrnehmbaren Signals ausgestaltete Einrichtung, die ein sinnwahrnehmbares Signal über einen Lautsprecher, eine Rundumwarnleuchte oder eine Lichtquelle ausgibt, wodurch auf einen erkannten Fehler hingewiesen wird. Vorteilhaft kann in die Anordnung der Pressenstraße auch eine mit dem Auswertungssystem verbundene Anzeigevorrichtung eingegliedert werden, die den erkannten Fehler visualisiert. Die für die Ausgabe eines sinnwahrnehmbaren Signals ausgestaltete Einrichtung kann auch als Bildschirm eines Computers, eines Mobiltelefons und ähnliches ausgeführt werden. Ferner ist Bestandteil des Arbeitsplatzes 4 der robotischen Kontrolle die Steuereinheit des Arbeitsplatzes der robotischen Kontrolle.

Die Steuereinheit der Pressanlage 1 und die Steuereinheit des Arbeitsplatzes 4 der robotischen Kontrolle werden durch PLC-Geräte gebildet, welche die Daten über einen Kommunikationsbus austauschen. Die Steuereinheit der Pressenstraße 1 sendet der Steuereinheit des Arbeitsplatzes 4 der robotischen Kontrolle die Information über die Bewegung des Pressteils in der Pressanlage, einschließlich des Transfers an den Arbeitsplatz der robotischen Kontrolle. In dem Moment sendet die Steuereinheit des Arbeitsplatzes 4 der robotischen Kontrolle den Befehl an die robotischen Arme zur Einleitung der Bewegung entlang der vorgegebenen Trajektorie. Nach Beendigung der Aufnahme sendet der robotische Arm die Information über den Abschluss des Vorganges an das Auswertungssystem und dieses System wertet die aufgenommenen Daten aus. Der robotische Arm fährt in die Grundstellung zurück. Beliebige der Steuereinheiten kann dabei als Auswertungssystem dienen, eventuell wird das Auswertungssystem als eine örtlich entfernte EDV-Anlage realisiert, welche das Ergebnis der Auswertung an die für die Ausgabe eines sinnwahrnehmbaren Signals ausgestalteten Einrichtung übergeben kann.

Die robotischen Arme bewegen sich bei der Messung entlang der voreingestellten Trajektorien in einer konstanten Distanz von der Oberfläche des Pressteils, damit ein Fehler in der Interpretation der Ergebnisse wegen unzureichenden Fokus vermieden wird. Die stabilen Positionen des Pressteils werden durch das robotische Ablegen der Pressteile erzielt.

Die Trajektorie ist eine Sammlung vorprogrammierter im Koordinatensystem des Roboters beschriebenen Bewegungen des robotischen Armes im Raum, anhand derer der Arm mit Kamera stufenweise unbeeinflusst die vorgegebene Position anfährt. Die Punkte der Trajektorie sind anhand eines dreidimensionalen Modells so gewählt, damit sie die Kontur des Pressteils in einer vorgegebenen, stabilen Distanz von der Oberfläche folgen und damit die aufgenommenen Daten eine Linie bilden, die den jeweiligen Bereich der Oberfläche des Pressteils wiedergibt.

Die einzelnen Trajektorien der robotischen Arme für verschiedene Typen der Pressteile sind im Speicher der Steuereinheit des Arbeitsplatzes 4 der robotischen Kontrolle hinterlegt und werden durch das Signal von der Steuereinheit der Pressenstraße 1 aufgerufen. Im Speicher der Steuereinheit des Arbeitsplatzes 4 der robotischen Kontrolle ist also eine Menge von Trajektorien hinterlegt, wobei jede der Trajektorien einem Bereich an der Oberfläche des Pressteils entspricht, wobei die Steuereinheit des Arbeitsplatzes 4 der robotischen Kontrolle von der Steuereinheit der Pressenstraße 1 die Information über den Typ des Pressteils empfängt (alternativ kontinuierlich empfängt), das an der Pressenstraße 1 gefertigt wird. Die Steuereinheit des Arbeitsplatzes 4 der robotischen Kontrolle macht einen Abgleich des Typs des an der Pressenstraße 1 aktuell produzierten Pressteils und falls der Typ des Pressteils dem im Speicher der Steuereinheit des Arbeitsplatzes 4 der robotischen Kontrolle hinterlegten Typ des Pressteils mit zugeordneten Trajektorie entspricht, dann folgt der robotische Arm mit Kamera bei der Kontrolle die vorgegebene Trajektorie. Falls der Typ des Pressteils keinem der im Speicher der Steuereinheit des Arbeitsplatzes 4 der robotischen Kontrolle hinterlegten Typen der Pressteile mit zugeordneten Trajektorie entspricht, dann führt der robotische Arm mit Kamera keine Kontrolle durch und wird abgestellt. Die Steuereinheit des Arbeitsplatzes 4 der robotischen Kontrolle kann alternativ von der Steuereinheit der Pressenstraße 1 die Information über den aktuell produzierten Typ des Pressteils nur beim Anlauf eines neuen Typs des Pressteils an der Pressenstraße 1 erhalten. Die Pressenstraße 1 ist nicht abhängig von der Funktion der Kontrollroboter 2 und falls eine Störung des Roboters vorkommt, bleibt dieser bewegungslos und die Straße setzt mit ihrem Programm fort.

Die hinterlegten Trajektorien sind für Gleichteile abweichend (ein Pressteil hat zum Beispiel einen Satz von drei Trajektorien A, B und C) und wechseln sich in regelmäßigen oder unregelmäßigen Zeitabständen ab. Anschließend kann die geforderte Häufigkeit der Kontrolle festgelegt werden, zum Beispiel kann beim ersten Pressteil die Kontrolle nach Trajektorie A, beim zweiten Pressteil die Kontrolle nach Trajektorie B und beim dritten Pressteil die Kontrolle nach Trajektorie C, beim vierten Pressteil die Kontrolle nach Trajektorie A usw. erfolgen. Alternativ kann einigen Trajektorien eine Priorität zugeordnet und somit die Häufigkeit deren Durchführung erhöht werden. Zum Beispiel werden in einer Folge von zehn Pressteilen bei zwei Pressteilen die Kontrollen nach Trajektorie A, bei zwei Pressteilen die Kontrollen nach der Trajektorie C und bei sechs Pressteilen die Kontrollen nach Trajektorie B durchgeführt. Eventuell können mehrere abwechselnde Trajektorien genutzt und eine als konstant belassen werden, die für eine Kontrolle bei allen Pressteilen angewendet wird.

Der Pressteil bleibt im Bereich des Arbeitsplatzes 4 der robotischen Kontrolle nur für eine sehr kurze Zeitdauer, bis der entnehmende Roboter 3 auf den Austragförderer 5 das weitere Pressteil auflegt und der Austragförderer mit dem ursprünglichen Pressteil vorrückt. Während dieser Zeit fährt die Kamera die vorgegebene Trajektorie durch. Der in dem Kamerakopf integrierte Strahler emittiert einen Laserstrahl, der die vorgegebene Bahn an der Oberfläche des Pressteils, und die Kamera nimmt die Reflexion des Laserstrahls von der Oberfläche des Pressteils auf. Die ermittelten Daten werden in das Auswertungssystem übertragen, das zum Beispiel eine EDV-Anlage mit einer Auswertungssoftware umfasst, welche aus den Kameradaten eine approximierte Kurve der Linie des Pressteils berechnet, für jeden ihrer Punkte den Krümmungstrend ermittelt und ein Abgleich mit dem Krümmungstrend der real aufgenommenen Kurve durchführt. Stellt es bei dem Abgleich dieser Parameter ein Widerspruch fest, wird das Pressteil als fehlerhaftes Pressteil ausgewertet und an die Signalanlage ein Befehl gesendet, die ein sinnwahrnehmbares Signal an die Bedienung des Austragförderers ausgibt. Das Signal wird in Form einer akustischen, alternativ optischen Ausgabe realisiert.

In einer bevorzugten Ausführung ist der Austragförderer 5 mit zwei robotischen Armen bestückt, die an den gegenüberliegenden Seiten des Förderers angeordnet sind, alternativ kann die Anzahl der Roboter erhöht oder reduziert werden, sodass die endgültige Anordnung dem Typ der kontrollierten Erzeugnisse entspricht.

Den Ergebnissen der einzelnen Messungen wird ein Zeit- und Positionslog zugeordnet, in dem jegliche Informationen aus der Menge Zeit, Typ des Pressteils, Fehlerstelle, Kamerakennzeichnung enthalten sind, um einfachere Orientierung für den Fall einer rückwärtigen Suche der Messergebnisse für den Bedarf einer wiederholten Kalibrierung oder für nachfolgende detaillierte Kontrolle zu gewähren. Die Daten sind im Speicher der auswertenden EDV-Anlage hinterlegt.

Bei Erkennung einer erhöhten Häufigkeit von fehlerhaften Pressteilen sendet das Auswertungssystem an die Steuereinheit der Pressenmaschine einen Abstellbefehl, wobei die erhöhte Häufigkeit als Anteil der fehlerhaften Pressteile in einer vorangehenden vorgegebenen Stückzahl der Pressteile definiert ist. Die Toleranz kann zum Beispiel als fünf fehlerhafte Teile unter den letzten zehn kontrollierten Pressteilen eingestellt werden, wenn also unter den letzten zehn nacheinander gehenden kontrollierten Pressteilen fünf fehlerhafte Pressteile erkannt wurden, dann sendet das Auswertungssystem an die Steuereinheit der Pressenstraße 1 ein Abstellbefehl, damit die Ursache der erhöhten Ausschussrate ermittelt werden kann.

### Gewerbliche Anwendbarkeit

Die oben beschriebene Anordnung der Fertigungsstraße mit integrierten robotischen Kontrolle für Erkennung der Oberflächenfehler kann ferner auch bei anderen Typen von Fertigungsstraßen in der Automobilindustrie angewendet werden, wo eine Kontrolle der Oberfläche des Erzeugnisses in gewisser Zeit gefordert wird.

## Patentansprüche

1. Pressenstraße umfassend eine Pressanlage (2) mit einer Reihe von Pressen, entnehmende robotische Arme am Ausgang der Pressanlage (2), deren Handlingsbereich in den Bereich des Austragförderers (5) eingreift und die zum Transport der Pressteile aus der Pressanlage (2) auf den Austragförderer (5) ausgestaltet sind, und einer für die Ausgabe eines sinnwahrnehmbaren Signals ausgestalteten Einrichtung, wobei im Anfangsbereich des Austragförderers (5) ein Arbeitsplatz (4) der robotischen Kontrolle der Oberfläche der Pressteile angeordnet ist umfassend die robotischen Arme, eine Steuereinheit des Arbeitsplatzes (4) der robotischen Kontrolle sowie Kameras,
**dadurch gekennzeichnet,**
**dass** die robotischen Arme mit den Kameras bestückt sind,
wobei in der Steuereinheit des Arbeitsplatzes (4) der robotischen Kontrolle Bewegungsbahnen der robotischen Arme hinterlegt sind, die den Positionen der einzelnen kontrollierten Bereiche an der Oberfläche des Pressteils entsprechen,
wobei für Gleichteile abweichende Bewegungsbahnen hinterlegt sind, die in regelmäßigen oder unregelmäßigen Zeitabständen abgewechselt werden.

2. Pressenstraße nach Anspruch 1 **dadurch gekennzeichnet, dass** sie ferner eine Steuereinheit der Pressenstraße (1) umfasst, die datentechnisch mit der Steuereinheit des Arbeitsplatzes (4) der robotischen Kontrolle verbunden ist.

3. Verfahren zur Kontrolle von Pressteilen mittels einer Pressenstraße nach einem der Ansprüche 1 oder 2, **dadurch gekennzeichnet, dass** es die Schritte umfasst:
Einlegen des Werkstücks in die Pressanlage (2), das stufenweise Abpressen, die Verlegung des Pressteils auf den Austragförderer (5);
Kontrolle der Oberfläche des Pressteils mit Kameras, wobei ein Kamerakopf einer Kamera des robotischen Armes eine Bewegungsbahn in einer konstanten Höhe oberhalb der Oberfläche des Pressteils folgt, wobei diese Bewegungsbahn der im Speicher der Steuereinheit des Arbeitsplatzes (4) der robotischen Kontrolle hinterlegten Bewegungsbahn entspricht;
Auswertung der aufgenommenen Daten durch das Auswertungssystem;
falls das Pressteil als fehlerloses Pressteil ausgewertet wird, folgt die Kontrolle eines weiteren Pressteils, falls das Pressteil als fehlerhaftes Pressteil ausgewertet wird, sendet das Auswertungssystem eine Information über die Kennzeichnung des Pressteils als n.i.O. und danach folgt die Kontrolle des weiteren Pressteils.

4. Verfahren zur Kontrolle von Pressteilen nach Anspruch 3, **dadurch gekennzeichnet, dass** während des Schrittes der Auswertung der aufgenommenen Daten durch das Auswertungssystem eine von der Kamera aufgenommene Linie der Oberfläche des Pressteils mit dem vom Auswertungssystem aus den aufgenommenen Daten berechneten Krümmungstrend verglichen wird, wobei bei einer Überschreitung der Toleranz das Presssteil als fehlerhaftes Pressteil ausgewertet wird.

5. Verfahren zur Kontrolle der Pressteile nach einem der Ansprüche 3 oder 4, **dadurch gekennzeichnet, dass** bei Erkennung eines fehlerhaften Pressteils von der Steuereinheit des Arbeitsplatzes (4) der robotischen Kontrolle eine Information an die für die Ausgabe eines sinnwahrnehmbaren Signals ausgestaltete Einrichtung gesendet wird, die ein sinnwahrnehmbares Signal an die Bedienung des Austragförderers (5) ausgibt.

6. Verfahren zur Kontrolle der Pressteile nach einem der Ansprüche 3 bis 5, **dadurch gekennzeichnet, dass** bei Erkennung einer erhöhten Häufigkeit von fehlerhaften Pressteilen das Auswertungssystem an die Steuereinheit der Pressanlage (1) einen Abstellbefehl sendet, wobei die erhöhte Häufigkeit als Anteil der fehlerhaften Pressteile in einer vorangehenden vorgegebenen Stückzahl der Pressteile definiert ist.

7. Verfahren zur Kontrolle der Pressteile nach beliebigen der Ansprüche 3 bis 6, **dadurch gekennzeichnet, dass** in der Steuereinheit des Arbeitsplatzes (4) der robotischen Kontrolle für jeden Typ von Pressteilen mehrere den einzelnen kontrollierten Abschnitten entsprechenden Bewegungsbahnen hinterlegt sind und die Steuereinheit des Arbeitsplatzes (4) der robotischen Kontrolle das Einprogrammieren der Kontrollhäufigkeit für jeweilige Abschnitte ermöglicht.

8. Verfahren zur Kontrolle der Pressteile nach beliebigen der Ansprüche 3 bis 7, **dadurch gekennzeichnet, dass** die Daten über die durchgeführte Messung in dem Speicher des Auswertungssystems einschließlich der Log-Datei mit beschreibenden Informationen archiviert werden.

9. Verfahren zur Kontrolle von Pressteilen nach Anspruch 8, **dadurch gekennzeichnet, dass** die beschreibenden Informationen beliebige Informationen aus der Menge Zeit, Typ des Pressteils, Fehlerstelle, Kamerakennzeichnung sind.

10. Verfahren zur Kontrolle der Pressteile nach beliebigen der Ansprüche 3 bis 9, **dadurch gekennzeichnet, dass** bei einer Änderung des Typs des Pressteils die Steuereinheit der Pressenstraße (1) an die Steuereinheit des Arbeitsplatzes (4) der robotischen Kontrolle die Information über diese Änderung sendet, wobei die Steuereinheit des Arbeitsplatzes (4) der robotischen Kontrolle einen Abgleich des Typs des an der Pressenstraße (1) aktuell produzierten Pressteils macht und falls der Typ des Pressteils dem im Speicher der Steuereinheit des Arbeitsplatzes (4) der robotischen Kontrolle hinterlegten Typ des Pressteils mit einer zugeordneten Bewegungsbahn entspricht, dann folgt der robotische Arm mit Kamera bei der Kontrolle der vorgegebenen Bewegungsbahn, falls der Typ des Pressteils keinem der im Speicher der Steuereinheit des Arbeitsplatzes (4) der robotischen Kontrolle hinterlegten Typ des Pressteils mit einer zugeordneten Bewegungsbahn entspricht, dann führt der robotische Arm mit Kamera keine Kontrolle durch und wird abgestellt.

## Claims

1. A press line comprising a press system (2) having a row of presses, removing robotic arms at the exit of the press system (2), the handling region of which engages in the region of the discharge conveyor (5) and which are designed for transport of the pressed parts from the press system (2) onto the discharge conveyor (5), and a device designed for the output of a sensible signal, wherein in the initial region of the discharge conveyor (5) a workstation (4) of the robotic control of the surface of the pressed parts is arranged comprising the robotic arms, a control unit of the work station (4) of the robotic control and cameras,
**characterized in**
**that** the robotic arms are equipped with cameras,
wherein movement paths of the robotic arms are stored in the control unit of the work station (4) of the robotic control, which movement paths correspond to the positions of the individual controlled regions on the surface of the pressed parts,
wherein deviating movement paths are stored for identical parts, which are alternated at regular or irregular time intervals.

2. The press line according to claim 1 **characterized in that** it also comprises a control unit of the press line (1), which is connected in terms of data technology to the control unit of the work station (4) of the robotic control.

3. A method for controlling pressed parts by means of a press line according to any one of claims 1 or 2, **characterized in that** it comprises the steps:
Insertion of the workpiece into the press system (2), the step-by-step pressing, the transfer of the pressed part to the discharge conveyor (5);
control of the surface of the pressed part with cameras, wherein a camera head of a camera of the robotic arm follows a movement path at a constant height above the surface of the pressed part, wherein this movement path corresponds to the movement path stored in the memory of the control unit of the work station (4) of the robotic control;
evaluation of the recorded data by the evaluation system;
if the pressed part is evaluated as a faultless pressed part, the control of a further pressed part follows, if the pressed part is evaluated as a faulty pressed part, the evaluation system sends a piece of information about the identification of the pressed part as not OK and then the control of the further pressed part follows.

4. The method for controlling pressed parts according to claim 3, **characterized in that** during the step of evaluating the recorded data by the evaluation system, a line of the surface of the pressed part recorded by the camera is compared with the curvature trend calculated by the evaluation system from the recorded data, wherein if the tolerance is exceeded the pressed part is evaluated as a faulty pressed part.

5. The method for controlling the pressed parts according to one of claims 3 or 4, **characterized in that** when a faulty pressed part is detected, a piece of information is sent by the control unit of the work station (4) of the robotic control to the device designed for the output of a sensible signal, which device outputs a sensible signal to the operator of the discharge conveyor (5).

6. The method for controlling the pressed parts according to one of claims 3 to 5, **characterized in that** when an increased frequency of faulty pressed parts is detected, the evaluation system sends a shutdown command to the control unit of the press system (1), wherein the increased frequency as a proportion of faulty pressed parts in a previous predetermined number of pieces of pressed parts is defined.

7. The method for controlling the pressed parts according to any one of claims 3 to 6, **characterized in that** several movement paths corresponding to the individual controlled sections are stored in the control unit of the work station (4) of the robotic control for each type of pressed parts and the control unit of the work station (4) of the robotic control enables the programming of the control frequency for respective sections.

8. The method for controlling the pressed parts according to any one of claims 3 to 7, **characterized in that** the data about the measurement performed are archived in the memory of the evaluation system, including the log file with descriptive information.

9. The method for controlling the pressed parts according to claim 8, **characterized in that** the descriptive information is any information from the set of time, type of pressed part, fault location, camera identification.

10. The method for controlling the pressed parts according to any one of claims 3 to 9, **characterized in that** in the event of a change in the type of the pressed part, the control unit of the press line (1) sends the piece of information about this change to the control unit of the work station (4) of the robotic control, wherein the control unit of the work station (4) of the robotic control makes a comparison of the type of the pressed part currently being produced on the press line (1) and if the type of the pressed part corresponds to the type of the pressed part with an assigned movement path stored in the memory of the control unit of the work station (4) of the robotic control, then the robotic arm with camera follows the predetermined movement path during the control, if the type of the pressed part corresponds to no type of the pressed part with an assigned movement path stored in the memory of the control unit of the work station (4) of the robotic control, then the robotic arm with camera does not perform a control and is shut down.

## Revendications

1. Ligne de presse comprenant une installation de presse (2) avec une série de presses, des bras robotiques de prélèvement à la sortie de l'installation de presse (2), dons le domaine de manutention pénètre dans le domaine du convoyeur d'évacuation (5) et qui sont conçus pour le transport des pièces pressées hors de l'installation de presse (2) vers le convoyeur d'évacuation (5), et un dispositif conçu pour la production d'un signal perceptible, dans lequel, dans la zone du début du convoyeur d'évacuation (5), est disposé un poste de travail (4) du contrôle robotique de la surface des pièces pressées, comprenant les bras robotiques, une unité de commande du poste de travail (4) du contrôle robotique ainsi que des caméras,
**caractérisée en ce que**
les bras robotiques sont équipés des caméras,
dans lequel, dans l'unité de commande du poste de travail (4) du contrôle robotique, sont enregistrées des trajectoires des bras robotiques qui correspondent aux positions des différentes zones contrôlées sur la surface de la pièce pressée, dans lequel, pour des pièces identiques, sont enregistrées des trajectoires différentes qui peuvent être modifiées à des intervalles réguliers ou irréguliers.

2. Ligne de presse selon la revendication 1, **caractérisée en ce qu'**elle comprend en outre une unité de commande de la ligne de presse (1), qui est reliée avec une transmission des données, avec l'unité de commande du poste de travail (4) du contrôle robotique.

3. Procédé de contrôle de pièces pressées au moyen d'une ligne de presse selon l'une des revendications 1 ou 2, **caractérisé en ce qu'**il comprend les étapes suivantes :
insertion de la pièce dans l'installation de presse (2), pressage par étapes, pose de la pièce pressée sur le convoyeur d'évacuation (5) ;
contrôle de la surface de la pièce pressée avec des caméras, dans lequel une tête de caméra d'une caméra du bras robotique suit une trajectoire à une hauteur constante au-dessus de la surface de la pièce pressée, dans lequel cette trajectoire correspond à la trajectoire enregistrée dans la mémoire de l'unité de commande du poste de travail (4) du contrôle robotique ;
analyse des données enregistrées par le système d'analyse ;
si la pièce pressée est considérée comme une pièce pressée sans défaut, le contrôle d'une autre pièce pressée est effectué, si la pièce pressée est considérée comme une pièce pressée défectueuse, le système d'analyse envoie une information concernant l'identification de la pièce pressée sous la forme d'un signal de non-conformité puis le contrôle d'une pièce pressée suivante est effectué.

4. Procédé de contrôle de pièces pressées selon la revendication 3, **caractérisé en ce que**, pendant l'étape d'analyse des données enregistrées par le système d'analyse, une ligne de la surface de la pièce pressée enregistrée par la caméra, est comparées avec la tendance de courbure calculée à partir des données enregistrées, dans lequel, lors d'un dépassement de la tolérance, la pièce pressée est considérée comme une pièce pressée défectueuse.

5. Procédé de contrôle de pièces pressées selon l'une des revendications 3 ou 4, **caractérisé en ce que**, lors de la détection d'une pièce pressée défectueuse, l'unité de commande du poste de travail (4) du contrôle robotique envoie une information au dispositif conçu pour l'émission d'un signal perceptible, qui émet un signal perceptible à la commande du convoyeur d'évacuation (5).

6. Procédé de contrôle de pièces pressées selon l'une des revendications 3 à 5, **caractérisé en ce que**, lors de la détection d'une fréquence accrue de pièces pressées défectueuses, le système d'analyse envoie une instruction d'arrêt à l'unité de commande de l'installation de presse (1), dans lequel la fréquence accrue est définie comme une part des pièces défectueuses dans un nombre prédéterminé de pièces pressées existantes.

7. Procédé de contrôle de pièces pressées selon certaines des revendications 3 à 6, **caractérisé en ce que**, dans l'unité de commande du poste de travail (4) du contrôle robotique, pour chaque type de pièces pressées, sont enregistrées plusieurs trajectoires correspondant aux différentes portions contrôlées et l'unité de commande du poste de travail (4) du contrôle robotique permet la programmation de la fréquence de contrôle pour les portions correspondantes.

8. Procédé de contrôle des pièces pressées selon certaines des revendications 3 à 7, **caractérisé en ce que** les données concernant la mesure effectuée sont archivées dans la mémoire du système d'analyse, y compris le fichier log avec les informations de description.

9. Procédé de contrôle des pièces pressées selon la revendication 8, **caractérisé en ce que** les informations de description sont des informations quelconques concernant la durée, le type de pièce pressée, l'endroit du défaut et l'identification de la caméra.

10. Procédé de contrôle des pièces pressées selon certaines des revendications 3 à 9, **caractérisé en ce que**, lors d'une modification du type de pièce pressée, l'unité de commande de la ligne de presse (1) envoie à l'unité de commande du poste de travail (4) du contrôle robotique l'information concernant cette modification, dans lequel l'unité de commande du poste de travail (4) du contrôle robotique efectue une comparaison du type de pièce pressée actuellement produit sur la ligne de presse (1) et, si le type de pièce pressée correspond au type de pièce pressée, avec une trajectoire correspondante, enregistré dans la mémoire de l'unité de commande du poste de travail (4) du contrôle robotique, le bras robotique avec la caméra suit, lors du contrôle, la trajectoire prédéterminée, si le type de pièce pressée ne correspond à aucun type de pièce pressée, avec une trajectoire correspondante, enregistré dans la mémoire de l'unité de commande du poste de travail (4) du contrôle robotique, alors le bras robotique avec la caméra n'effectue aucun contrôle et est arrêté.
